# EUROPEAN PATENT SPECIFICATION

(11) **EP 4 100 137 B1**
(45) Date of publication and mention of the grant of the patent: **14.08.2024**
(21) Application number: 21704962.6
(22) Date of filing: 11.01.2021
(51) Int. Cl.: A63F 13/20, A63B 22/02, A63B 71/06, A63F 13/25, A63F 13/52, A63F 13/5255, G06F 3/01

(54) **HAPTIC VR SIMULATION DEVICE**
HAPTISCHE VR-SIMULATIONSVORRICHTUNG
DISPOSITIF DE SIMULATION DE RÉALITÉ VIRTUELLE HAPTIQUE

(30) Priority: 04.02.2020 NL 1043556
(43) Date of publication of application: 14.12.2022
(73) Proprietor: Virtuwalk B.V., 3833 AJ Leusden (NL)
(72) Inventor: WENNEKES, Leonardus Clemens Maria, 3833 AJ Leusden (NL); NIEUWENHUIS, Franciscus Jitte Maria, 3958 XT Amerongen (NL)
(74) Representative: Algemeen Octrooi- en Merkenbureau B.V.
(86) International application number: PCT/NL2021/050012
(87) International publication number: WO 2021/158097

(56) References cited:
- EP-A2- 2 716 331
- US-A1- 2008 039 289
- US-A1- 2019 220 087

## Description

The invention relates to a haptic VR simulation device for a user, with which the user can move, by walking or cycling, through a virtual environment displayed by Virtual Reality (VR) display means.

US2019/220087A1, EP2716331A2 and US2008/039289 provide examples of such devices of the art.

The object of the present invention is to provide an improved simulation device, in particular - but not exclusively - for the purpose of study and/or rehabilitation of walking movements and, optionally, bicycle movements.

The invention is defined by the appended claims.

To this end, according to the invention, a device is provided which is intended and arranged as a haptic VR simulation device for a user, with which the user, under the control of natural or nature-identical body movements and/or displacement of the body weight, as detected by detection means, is able to displace, walking or cycling, on a treadmill through a virtual environment as displayed by a VR control system and VR display means, the treadmill having a physically movable unidirectional running deck, powered by running deck drive means, under the control of a treadmill control system, wherein the detection means comprises a control member provided with functionally and essentially such a shape, for example of a horizontal (recumbent) U, that in use of the device when the user is located on the running deck of the treadmill, the control member is extending in front of and/or at least partially to the side of the user, wherein the control member is coupled to a rotational pressure sensor arranged for detecting rotational pressure on the control member counter clockwise or clockwise around a substantially vertical axis of rotation of the control member, and wherein the control member is coupled to one or more transverse pressure sensors, which are arranged to detect transverse pressure on the control member forward or rearward and/or in other directions transverse to the substantially vertical axis of rotation of the control member,
wherein the rotational pressure sensor and one or more transverse pressure sensors, for example by means of a simulation control system, are coupled to the VR control system and the treadmill control system, all this arranged in such a way that
- if the user exerts a pressure forward or rearward on the control member, the running deck is moved rearward or forward, respectively, by an amount depending on the amount of pressure exerted to the control member;
- if the user additionally (to a forward or rearward pressure) exerts on the control member a rotational pressure, and/or a transverse pressure to the right or to the left, the VR control system moves the virtual environment displayed in the VR display means to the left or the right, respectively, by an amount depending on the amount of pressure applied to the control member.

Preferably, the simulation control system is arranged such that
- if the user exerts a forward or rearward pressure on the control member, the VR control system moves the virtual environment displayed in the VR display means slightly upward or downward by an amount depending on the amount of pressure applied to the control member;
   and/or
- if the user additionally (to a forward or rearward pressure) exerts on the control member a rotational pressure, and/or a transverse pressure to the right or to the left, the VR control system slightly tilts the virtual environment displayed in the VR display means to the left or to the right, respectively by an amount depending on the amount of pressure applied to the control member.

In summary, the invention comprises a treadmill combined with a VR head set, creating the illusion that a user can actually walk interactively through a (virtual) space (optionally cycle). This is done by moving the image (shown to the user via the, for example, VR headset) from the VR control system under the influence of input from an intuitive control member operated by the user.

During use of the device, the user stands on the running deck of the treadmill and thereby holds or at least touches the control member. The forces (pressure directions) on this control member are detected and these actions of the user control the treadmill and/or the VR image. The speed of the running deck is fairly consistent with the movement of the VR image in the VR headset.

If the user wants to walk forward, he is able to do so. The standard consequence thereof is, that the user exerts some degree of forward force on the control member. The control member is fixed on the treadmill and the user steps forward on the running deck. However, the treadmill control system is linked to the force measured in the control member and the running deck will start moving. At the same time and at the same speed, the VR image will move rearward. This combination creates the illusion that the user is walking forward.

The same logic is applied to turn around: the control member also measures the transverse force and/or the rotational torque on the control member about the vertical axis of the control member.

An adjustable combination (preferably) of the sideways exerted force and/or the torque on the control member provides for turning the world in the VR headset. This creates for the user in the VR image the illusion of being rotated. Since the control member itself does not actually rotate or at least rotates to a little extent, the user is not aware (is not aware of this) that his legs, which walk on the running deck, are not turning. Use is being made of this observation in the device according to the invention. Due to the combination of walking forward and turning, the user has the illusion of actually walking through a virtual world.

The VR system itself incorporates the behaviour, that if the user only turns its head, a corresponding part of the VR image is displayed. This gives the illusion that the user is simply walking straight ahead, and solely turning its head. Only when the control member is pressed to the side and/or is loaded with a rotational torque, the VR world turns. The illusion is equal to that of pushing a shopping cart through a supermarket: it must also be actively turned by the user's hands.

The invention will now be discussed in more detail with reference to the figure description below.

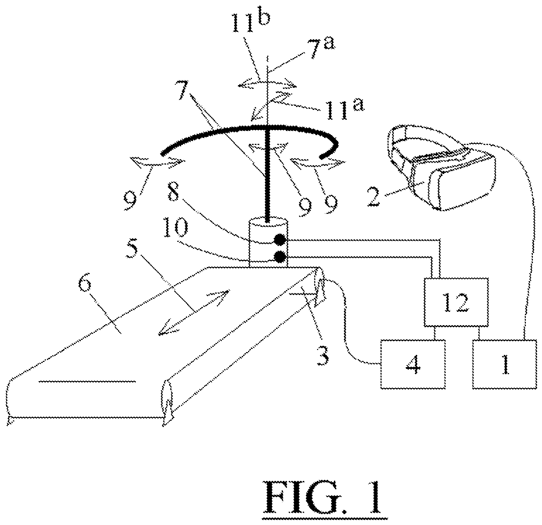

Figure 1 schematically shows an exemplary embodiment of a device according to the invention.

Figure 1 schematically shows an exemplary embodiment of a device according to the invention, which is intended and arranged as a haptic VR simulation device for a user (not shown) with which the user, under the control of natural or nature-identical body movements and/or displacement of the body weight, detectable by detection means, is displacing, walking or cycling, through a virtual environment displayed by a VR control system 1 and VR display means 2 using a treadmill with a unidirectional 5 running deck 6, which is physically displaceable by means of running deck driving means 3, under the control of a treadmill control system 4.

The detection means for detecting natural or nature-identical body movements and/or displacement of the body weight of the user, when the user is moving, walking or cycling, through a virtual environment displayed by the VR control system 1, comprise a control member 7, which is functionally and essentially provided with such a shape, for example of a horizontally oriented U, that the control member extends in front of and/or at least partly to the side of the user when the user is positioned on the running deck 6 of the treadmill, during use of the device.

The control member 7 is coupled to a rotational pressure sensor 8 (in the present application, the terms "pressure" and "force" are considered and defined as identical), which is adapted to detect rotational pressure, represented by the arrows 9, on the control member counter clockwise or clockwise around a substantially vertical axis of rotation 7a of the control member 7. The control member 7 is also coupled to one or more transverse pressure sensors 10, which are arranged to detect transverse pressure, represented by the arrows 11, on the control member 7 forward or rearward 11a and/or in other directions 11b transverse to the essentially vertical axis of rotation 7a of the control member 7.

The rotational pressure sensor 8 and the one or more transverse pressure sensors 10 are coupled to the VR control system 1 and the treadmill control system 4, for example by means of a simulation control system 12.

All this is arranged with hardware and software such that
- if the user exerts a forward or rearward pressure 11a on the control member 7, the running deck 6 is moved rearward or forward 5, respectively, by an amount depending on the amount of pressure exerted to the control member;
- if the user additionally (to a forward or rearward pressure) exerts on the control member 7 a rotational pressure 9, and/or a transverse pressure 11b to the right or to the left, the VR control system 1 moves the virtual environment displayed in the VR display means 2 to the left or to the right respectively by an amount which depends on the degree of the pressure exerted on the control member 7.

Moreover - optionally - a feature is provided with which, if the user exerts a forward or rearward pressure 11a on the control member 7, the VR control system 1 moves the virtual environment shown in the VR display means 2 slightly upward or downward, respectively by an amount depending on the amount of pressure exerted to the control member. Furthermore - also optionally - a feature is provided with which, if the user - in addition to a forward or rearward pressure 11a - exerts a rotational pressure 9 on the control member 7, and/or a transverse pressure 11b to the right or to the left, the VR control system 1 will tilt the virtual environment in the VR display means 2 slightly to the left or to the right, respectively by an amount depending on the amount of pressure applied to the control member.

Hence, the present invention provides an improved simulation device for the purpose of study, experience and/or rehabilitation, etcetera of walking movements and optionally cycling movements.

## Claims

1. Device intended and arranged as a haptic VR simulation device for a user, with which the user, under the control of pressure exerted by the user as detected by detection means, is able to displace, walking or cycling, on a treadmill through a virtual environment as displayed by a VR control system (1) and VR display means (2), the treadmill having a physically movable unidirectional (5) running deck (6), powered by running deck drive means (3), under the control of a treadmill control system (4),
wherein the detection means comprises a control member (7), further **characterised by**: which is functionally and essentially provided with such a shape, that in use of the device when the user is located on the running deck, the control member extends in front of the user and at least partly to the side of the user,
wherein the control member is coupled to a rotational pressure sensor (8), which is arranged for detecting the rotational pressure (9) on the control member counter clockwise or clockwise around a substantially vertical axis of rotation (7a) of the control member, and wherein the control member is coupled to one or more transverse pressure sensors (10), which are arranged to detect transverse pressure (11) on the control member forward or rearward (11a) and in other directions (11b), transverse to the essentially vertical axis of rotation of the control member,
wherein the rotational pressure sensors and one or more transverse pressure sensors are coupled to the VR control system and to the treadmill control system, all this arranged in such a way that
- if the user exerts a forward or rearward pressure on the control member, the running deck is moved rearward or forward, respectively, by an amount depending on the amount of pressure applied to the control member;
- if the user additionally exerts on the control member a rotational pressure, or a transverse pressure to the right or to the left, the VR control system moves the virtual environment displayed in the VR display means to the left or to the right, respectively, by an amount depending on the amount of pressure applied to the control member.

2. Device according to claim 1, wherein, if the user exerts a forward or rearward pressure on the control member, the VR control system moves the virtual environment displayed in the VR display means slightly upward or downward, respectively, by an amount depending on the amount of pressure applied to the control member.

3. Device according to claim 1 or 2, wherein, if the user exerts on the control member a rotational pressure, or a transverse pressure to the right or to the left, the VR control system tilts the virtual environment displayed in the VR display means slightly to the left or the right, respectively, by an amount depending on the amount of pressure applied to the control member.

## Patentansprüche

1. Vorrichtung, die als haptische VR-Simulationsvorrichtung für einen Benutzer bestimmt und angeordnet ist, mit der der Benutzer unter der Steuerung des durch den Benutzer ausgeübten Drucks, der durch Erfassungsmittel erfasst wird, in der Lage ist, sich durch Gehen oder Fahren mit dem Fahrrad auf einem Laufband durch eine virtuelle Umgebung zu bewegen, die durch ein VR-Steuerungssystem (1) und VR-Anzeigemittel (2) angezeigt wird, wobei das Laufband ein physisch bewegbares unidirektionales (5) Laufdeck (6) aufweist, das durch Laufdeckantriebsmittel (3) unter der Steuerung eines Laufbandsteuerungssystems (4) angetrieben wird,
wobei die Erfassungsmittel ein Bedienelement (7) umfasst, ferner **dadurch gekennzeichnet, dass** es funktionell und im Wesentlichen mit einer solchen Form versehen ist, dass sich das Bedienelement beim Gebrauch der Vorrichtung, wenn sich der Benutzer auf dem Laufdeck befindet, vor dem Benutzer und zumindest teilweise zur Seite des Benutzers erstreckt,
wobei das Bedienelement mit einem Rotationsdrucksensor (8) gekoppelt ist, der zum Erfassen des Rotationsdrucks (9) auf das Bedienelement gegen den Uhrzeigersinn oder im Uhrzeigersinn um eine im Wesentlichen vertikale Rotationsachse (7a) des Bedienelements herum angeordnet ist, und wobei das Bedienelement mit einem oder mehreren Querdrucksensoren (10) gekoppelt ist, die zum Erfassen des Querdrucks (11) auf das Bedienelement vorwärts oder rückwärts (11a) und in anderen Richtungen (11b), quer zur im Wesentlichen vertikalen Rotationsachse des Bedienelements, angeordnet sind,
wobei die Rotationsdrucksensoren und ein oder mehrere Querdrucksensoren mit dem VR-Steuerungssystem und dem Laufbandsteuerungssystem gekoppelt sind, all dies so angeordnet, dass
- wenn der Benutzer einen Druck nach vorne oder nach hinten auf das Bedienelement ausübt, das Laufdeck um einen Betrag nach hinten bzw. nach vorne bewegt wird, der von dem Betrag des auf das Bedienelement ausgeübten Drucks abhängt;
- wenn der Benutzer zusätzlich einen Rotationsdruck oder einen Querdruck nach rechts oder links auf das Bedienelement ausübt, das VR-Steuerungssystem die in dem VR- Anzeigemittel angezeigte virtuelle Umgebung um einen Betrag nach links bzw. nach rechts bewegt, der von dem Betrag des auf das Bedienelement ausgeübten Drucks abhängt.

2. Vorrichtung nach Anspruch 1, wobei das VR-Steuerungssystem, wenn der Benutzer einen Druck nach vorne oder nach hinten auf das Bedienelement ausübt, die in dem VR-Anzeigemittel angezeigte virtuelle Umgebung geringfügig nach oben bzw. nach unten um einen Betrag bewegt, der von dem Betrag des auf das Bedienelement ausgeübten Drucks abhängt.

3. Vorrichtung nach Anspruch 1 oder 2, wobei das VR-Steuerungssystem, wenn der Benutzer auf das Bedienelement einen Rotationsdruck oder einen Querdruck nach rechts oder links ausübt, die in dem VR-Anzeigemittel angezeigte virtuelle Umgebung geringfügig nach links bzw. rechts um einen Betrag kippt, der von dem Betrag des auf das Bedienelement ausgeübten Drucks abhängt.

## Revendications

1. Dispositif conçu et arranger comme un dispositif de simulation VR haptique pour un utilisateur, avec lequel l'utilisateur, sous le contrôle d'une pression exercée par l'utilisateur telle que détectée par des moyens de détection, est capable de se déplacer, en marchant ou en faisant du vélo, sur un tapis roulant à travers un environnement virtuel tel qu'affiché par un système de commande VR (1) et des moyens d'affichage VR (2), le tapis roulant ayant une plateforme de course (6) unidirectionnelle (5) physiquement mobile, alimentée par des moyens d'entraînement de plateforme de course (3), sous le contrôle d'un système de commande de tapis roulant (4),
dans lequel les moyens de détection comprennent un élément de commande (7),
**caractérisé en outre : en ce qu'**il est fonctionnellement et essentiellement pourvu d'une forme telle que, lors de l'utilisation du dispositif lorsque l'utilisateur se trouve sur la plateforme de course, l'élément de commande s'étend devant l'utilisateur et au moins en partie du côté de l'utilisateur,
dans lequel l'élément de commande est couplé à un capteur de pression de rotation (8), qui est agencé pour détecter la pression de rotation (9) sur l'élément de commande dans le sens inverse des aiguilles d'une montre ou dans le sens des aiguilles d'une montre autour d'un axe de rotation sensiblement vertical (7a) de l'élément de commande, et dans lequel l'élément de commande est couplé à un ou plusieurs capteurs de pression transversale (10), qui sont agencés pour détecter une pression transversale (11) sur l'élément de commande vers l'avant ou vers l'arrière (11a) et dans d'autres directions (11b), transversales à l'axe de rotation essentiellement vertical de l'élément de commande,
dans lequel les capteurs de pression de rotation et un ou plusieurs capteurs de pression transversale sont couplés au système de commande VR et au système de commande de tapis roulant, le tout étant agencé de manière à ce que
- si l'utilisateur exerce une pression vers l'avant ou vers l'arrière sur l'élément de commande, la plateforme de course soit déplacée vers l'arrière ou vers l'avant, respectivement, d'une quantité dépendant de la quantité de pression appliquée à l'élément de commande,
- si l'utilisateur exerce en plus sur l'élément de commande une pression de rotation, ou une pression transversale vers la droite ou vers la gauche, le système de commande VR déplace l'environnement virtuel affiché dans les moyens d'affichage VR vers la gauche ou vers la droite, respectivement, d'une quantité dépendant de la quantité de pression appliquée à l'élément de commande.

2. Dispositif selon la revendication 1, dans lequel, si l'utilisateur exerce une pression vers l'avant ou vers l'arrière sur l'élément de commande, le système de commande VR déplace l'environnement virtuel affiché dans les moyens d'affichage VR légèrement vers le haut ou vers le bas, respectivement, d'une quantité dépendant de la quantité de pression appliquée à l'élément de commande.

3. Dispositif selon la revendication 1 ou 2, dans lequel, si l'utilisateur exerce sur l'élément de commande une pression de rotation, ou une pression transversale vers la droite ou vers la gauche, le système de commande VR incline l'environnement virtuel affiché dans les moyens d'affichage VR légèrement vers la gauche ou vers la droite, respectivement, d'une quantité dépendant de la quantité de pression appliquée à l'élément de commande.
